Europäisches Patentamt

European Patent Office

Office européen des brevets

(11) Publication number : **0 494 077 A1**

# EUROPEAN PATENT APPLICATION

(21) Application number : **92100022.0**

(22) Date of filing : **02.01.92**

(51) Int. Cl.⁵ : **B65D 81/38, B32B 29/06**

(30) Priority : **04.01.91 US 637363**
**23.07.91 US 734636**

(43) Date of publication of application :
**08.07.92 Bulletin 92/28**

(84) Designated Contracting States :
**AT BE CH DE DK ES FR GB IT LI NL SE**

(71) Applicant : **Petcavich, Robert J.**
**4136 Palisades Road**
**San Diego, California 92116 (US)**

(72) Inventor : **Petcavich, Robert J.**
**4136 Palisades Road**
**San Diego, California 92116 (US)**

(74) Representative : **Flosdorff, Jürgen, Dr.**
**Alleestrasse 33**
**W-8100 Garmisch-Partenkirchen (DE)**

(54) **Low emissivity food packaging.**

(57)   Packaging for enclosing and maintaining the temperature of prepared food products, which has essentially the same temperature retention characteristics as nonrecyclable, nondegradable styrofoam containers, is comprised entirely of 100% degradable and recyclable materials, namely, an exterior base sheet of paper (20), a barrier highly resistant to passage of air (24) and grease lining the interior surface of the base sheet, and a coating (26) of very low emissivity on the interior surface of the barrier. A protective coating (28) for the low emissivity coating is optional.

FIG. 3

Cross-Reference

This application is a continuation-in-part of copending application Serial No. 07/637,363, filed January 4, 1991.

Field of the Invention

The invention relates to thermal insulating packaging for prepared food products, such as the hot food items served at fast food restaurants for consumption on or off the premises.

Background

Fast food restaurants frequently prepare their hot food items in anticipation of expected trade so that when a patron enters the facility or drives up to the drive through service window, the food is ready to be served instantly.

In order to keep the food at a desirable eating temperature in the interval between preparation and serving, which may on occasion be as much as a half hour or more, it is advantageous to package the food in a thermal insulating container so that it will retain most of its heat of preparation.

It has become customary in the fast food business to utilize molded styrofoam containers for purposes of thermal insulation, attractive presentation of the product to the consumer, and economy in packaging.

However, styrofoam is not degradable and is not readily or economically recyclable. Consequently, fast food styrofoam containers have become an environmental hazard to our society. (See, e.g., The Wall Street Journal, 11/2/90, p. A3). As a recent public service advertisement ("Time", 12/17/90, p.101) stated the case, styrofoam is forever; it will never decompose, never disintegrate, never go away; and neither will the garbage problems it creates unless we find solutions.

The object of the present invention is to provide the solution.

Summary of the Invention

It is the object of the present invention to provide packaging for prepared food products that has all of the advantages of styrofoam but is 100% degradable and recyclable.

In a first aspect of the invention, it is an object to provide a container for prepared food products that is simple and economical to make on standard paperboard container manufacturing equipment, that can be imprinted on standard paperboard package printing equipment for decorative and informational purposes, that will physically protect and thermally insulate the contained food product, that will provide for atractive presentation of the packaged food product to the patron, that will be very economical, and most importantly, will be 100% degradable and recyclable.

In accordance with the invention, a degradable and recyclable container for enclosing and thermally insulating a prepared food product is comprised of an outer shape retaining shell of recyclable material, a recyclable barrier resistant to passage of air, food juices and grease adhered to the interior surface of said shell, and a degradable coating of low emissivity on the interior surface of said barrier, the emissivity of said coating being no greater than about 0.50 to provide thermal insulation for the contained food product.

In a second aspect of the invention, yet another object is to provide a flexible low emissivity sheet material, having the characteristics above described, that is especially adapted for the formation of bags and/or for wrapping about prepared food products for the combined purposes of sanitation and heat retention.

In accordance with the invention, flexible packaging and sheet material for making the above described container is economically produced in sheet or roll form from readily available raw and/or partially processed base stock on conventional laminating and coating equipment. The packaging material in sheet or roll form can then be processed in accordance with standard paper container manufacturing and printing procedures to produce fully recyclable, thermal insulating, economical food packaging.

These and other objects and advantages of the invention will become apparent from the following detailed description, as considered in connection with the accompanying drawings.

Brief Description of the Drawings

Fig. 1 is a top plan view of a food container, known as a clam shell container, which is very popular in the fast food industry, the view illustrating the container in its open condition;

Fig. 2 is a side elevation of the container of Fig. 1, illustrating the same in open condition in solid lines and illustrating in dotted lines the top or right-hand half of the container folded over onto the top of the bottom or left hand half of the container to close the container;

Fig. 3 is a cross sectional view on an enlarged scale of a packaging material provided in accordance with the invention;

Fig. 4 is a cross sectional view of a clam shell container arranged for testing of its ability to thermally insulate a contained food product; and

Fig, 5 is a graphic comparison of the thermal insulating characteristics of a clam shell container of conventional foam construction and a low emissivity or "Low E" clam shell container made in accordance with the present invention.

## Detailed Description

The following is a detailed description of the best mode presently contemplated by the inventor for carrying out his invention.

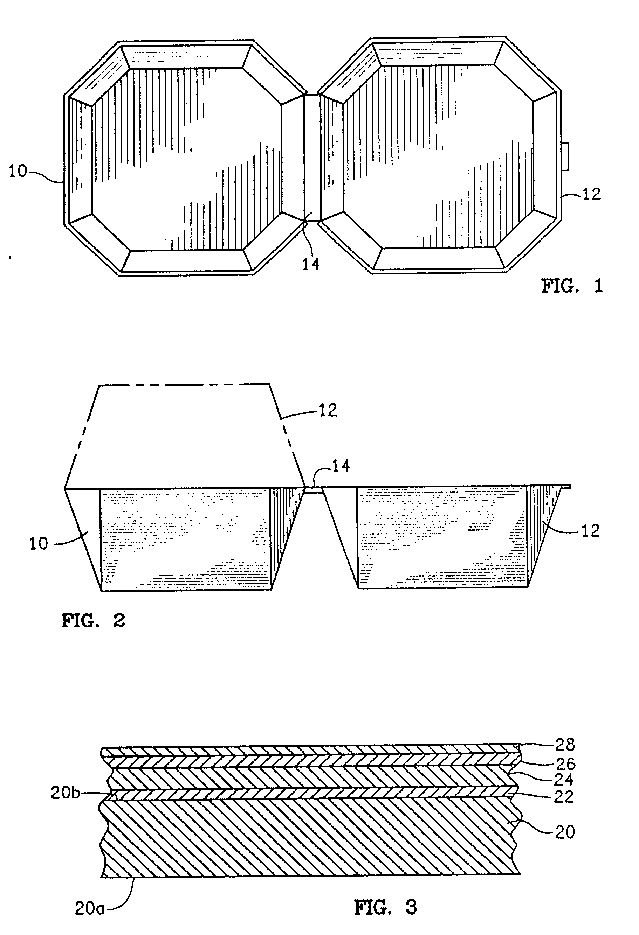

Figures 1 and 2 illustrate a conventional form of container, called a clam shell container, that is very popular for use in packaging prepared and ready to eat foods in fast food restaurants. Customarily, the container is of molded one piece styrofoam construction to provide thermal insulation for and maintain the temperature of the prepared food product. The container is conventionally comprised of identical halves 10 and 12 hingedly connected together by an integral foldable hinge strip 14. One container half comprises the bottom for reception of the food, e.g., the left-hand half 10, and the other or right-hand half 12 comprises the container top, the latter half being adapted to be hingedly folded over onto the bottom half, as indicated in dotted lines in Fig. 2, to encapsulate the food in an enclosed thermally insulating environment.

In accordance with the present invention, containers of the type shown in Figs. 1 and 2 and other containers of a like nature are fabricated from a completely degradable and recyclable packaging material which is illustrated in cross section, on a greatly magnified scale, in Fig. 3. The packaging material of the invention is comprised essentially of an outer, base layer 20 having an outer or exterior surface 20a and an inner or interior surface 20b, a barrier layer 24 adhered to the inner or interior surface of the base layer 20, and a layer or coating 26 having very low emissivity adhered to the inner surface of the barrier 24.

For the formation of shape retaining packages or boxes, such as the clamshell container of Figs. 1 and 2, the exterior or base layer 20 of the packaging material may be formed of any degradable and recyclable material capable of imparting the necessary shape retentive characteristic to the packages to be formed. The material preferred for the purpose, because of its economy and ease of fabrication into containers, is paperboard. Corrugated board and paper mache are also suitable materials and are intended to be encompassed within the generically employed term "paperboard". The board may be bleached or unbleached and is customarily from about 0.001 inch to about 0.050 inch thick.

For the formation of flexible packaging materials, to be formed into bags or to be used as food wrappers or wraps, the exterior or base layer 20 may comprise any flexible sheet material that is fully degradable and recyclable. The material preferred for the purpose is paper having a thickness in the order of from about 0.0005 to about 0.005 inch. The paper may be bleached or unbleached, and formed from either virgin or recycled stock.

The purpose of the barrier layer 24 is to prevent, or at least to inhibit, the passage of air, food juices and grease through the packaging material. A preferred material is glassine paper because it is highly resistant to passage of air and grease, is completely degradable and recyclable, is reasonably economical, and is readily laminated with existing equipment and known techniques to paper and paperboard substrates.

Glassine paper having a thickness of from about 0.0005 inch to about 0.010 inch is well suited to performance of the barrier function.

In the preferred embodiment of the packaging material, glassine paper 24 in sheet or roll form is laminated to a base layer 20 of paper or paperboard, also in sheet or roll form, by means of an interposed layer 22 of adhesive, utilizing conventional paper laminating equipment. The adhesive 22 may be selected from a group of degradable, preferably water soluble adhesives such as polyvinyl alcohol, polyacrylic acid and polyisoprenes, and is suitably applied in a thickness from about 0.0001 to about 0.005 inch.

The low emission layer or coating 26 on the interior surface of the barrier 24 must have an emissivity no greater than about 0.5, and preferably no greater than about 0.2, highly reflective metals such as aluminum, copper, silver, gold and nickel being preferred. For practicality, economy and degradability, vapor or sputter deposited aluminum is the preferred material for the coating 26. Aluminum can conveniently be deposited with a firm bond onto glassine paper, and aluminum coated glassine papers are readily available from a number of sources, such as Nicolet Paper Company, De Pere, Wisconsin 54115. Vapor deposited aluminum will oxidize quite readily to harmless aluminum oxide, and is therefore fully degradable. The aluminum may be deposited on the glassine substrate to a thickness from about 10 to about 10,000 angstroms. However, at the upper limit of this broad range, the packaging material would not be as cost effective as is usually desired. To attain the three-fold goal of low emissivity, ready degradability and cost effectiveness, the thickness of the aluminum coating should preferably not exceed about 1,000 angstroms, and even more preferably, about 100 angstroms. At present, in practice of the invention, an aluminum coating in the order of from about 30 to about 50 angstroms thick is being used very effectively.

In the case of the flexible packaging material, the base layer of paper could be a treated grease-proof paper having at least one surface that is sufficiently smooth to receive a metallic coating having the low emissivity required for practice of the invention. However, for reasons of ready availability, as above discussed, it is presently preferred to use an aluminum coated glassine paper laminated to a paper base stock.

If desired for particular applications, an optional top coat 28 of a food compatible lacquer may be applied over the interior or exposed surface of the low emissivity coating 26. Any food compatible polymeric coating, sufficiently thin not to impede degradation, e.g., from about 0.0000001 to about 0.001 inch, is acceptable. Excessive thickness should be avoided so as not to impair the function of the coating 26 or the degradability of the packaging material.

The resultant packaging material is very economical, is conveniently and economically made with existing and readily accessible base or raw materials on existing conventional machinery, and is readily fabricated into wrappers, bags and containers of practically any size or shape on existing paper products manufacturing and printing equipment.

When fabricated into containers, such as the clam shell food cartons disclosed in U.S. patents 4,232,816 and 4,472,896, with the base layer 20 on the exterior and the low emissivity coating 26 on the interior, the packaging material of the invention provides a carton having essentially the same thermal insulating properties as a comparable sytrofoam carton, and yet is 100% degradable and recyclable.

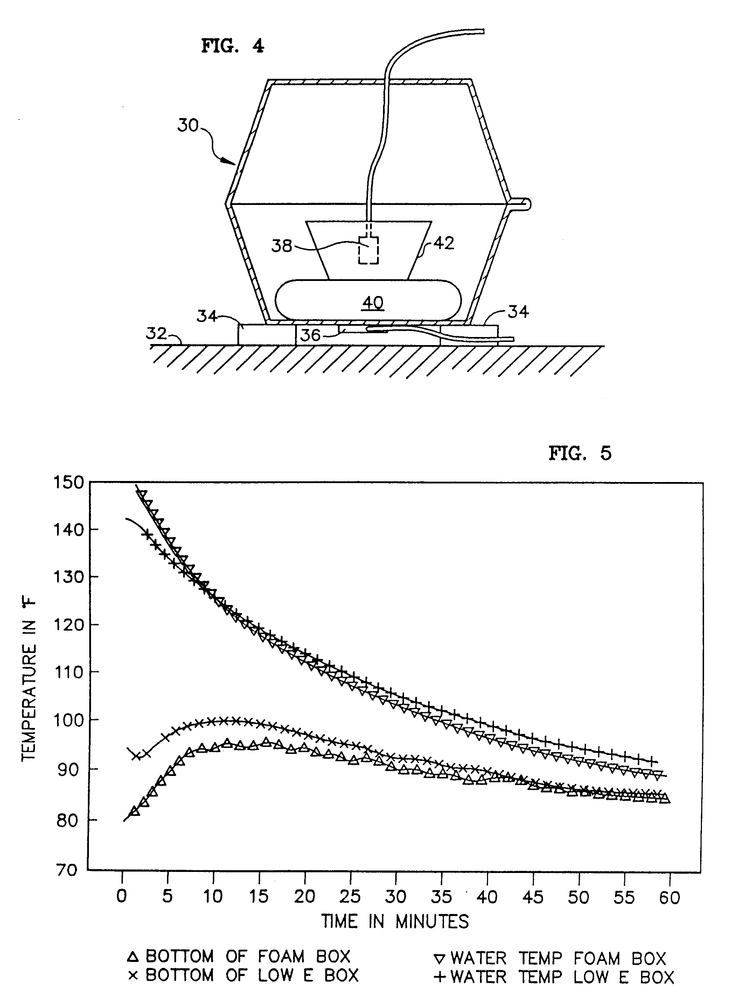

To measure and compare the thermal insulation properties of a conventional foam clam shell container and a clam shell container hand fabricated in accordance with the teachings of the invention, a test arrangement was set up as illustrated in Fig. 4. The respective container 30 was elevated above the supporting surface 32 by thermally insulating spacers 34 and a temperature probe 36 was mounted to engage the lower surface of the container in order to measure the temperature at the exterior of the container below the bottom of a simulated food product in the container. The simulated food product consisted of a hamburger bun 40 rested on the bottom wall of the container and a plastic cup 42 rested on the bun and containing a quantity of water at a temperature simulating a usual and customary grilled or prepared hamburger patty. A second probe 38 was inserted in the water to measure the temperature of the water over time. The container was closed promptly after the cup of water was placed in the container and the temperature probe 38 was immersed in the water.

In the first test, the container used was a foam hamburger container from a McDonalds restaurant, the bun 40 was at room temperature and weighed 23.7 grams, and the quantity of water was 50.5 grams at a starting temperature of 148° F.

Temperature readings were taken at uniform intervals of time over a period of one hour. The temperature readings taken are plotted graphically in Fig. 5; the temperature readings for the probe 36 being designated as "Bottom of Foam Box" and the temperature readings from the probe 38 being designated as "Water Temp Foam Box".

In the second test, the container used was a comparable clam shell container hand fabricated in accordance with the teachings of the invention, and having an interior surface with an emissivity of about 0.12. The bun weighed 24.2 grams and the starting temperature of the water was 155° F. All other test conditions remained the same. The temperature readings taken are plotted graphically in Fig. 5; the temperature readings for the probe 36 being designated as "Bottom of Low E Box" and the temperature readings for the probe 38 being designated as "Water Temp Low E Box".

As shown graphically in Fig. 5, the container of the invention provided essentially the same thermal insulating properties as the foam container from the McDonalds restaurant. But the container of the invention is degradable and recyclable, whereas the foam container is not. Consequently, the objects and advantages of the invention have been shown herein to be attained in a convenient, practical and facile manner.

While the best modes presently contemplated for carrying out the invention have been herein illustrated and described, it is to be appreciated that various changes, rearrangements and modifications may be made therein without departing from the scope of the invention, as defined by the appended claims.

## Claims

1. Degradable and recyclable packaging for enclosing and thermally insulating a prepared food product comprising

   an outer layer formed of paper and having an exterior surface and an interior surface,

   a degradable barrier resistant to passage of air and grease on the interior surface of said outer layer and itself having an interior surface, and

   a degradable layer of material having very low emissivity on the interior surface of said barrier.

2. Packaging as set forth in Claim 1 wherein said degradable barrier comprises glassine paper adhered to the interior surface of said outer layer.

3. Packaging as set forth in Claim 1 wherein said degradable layer of low emissivity material has an emissivity no greater than about 0.50.

4. Packaging as set forth in Claim 1 wherein said degradable layer of low emissivity material comprises a metal deposited on said barrier to a thickness in the order of from about 10 to about 10,000 angstroms and having an emissivity no greater than about 0.50.

5. Packaging as set forth in Claim 1 wherein said degradable barrier comprises glassine paper and said degradable layer of low emissivity material comprises a reflective metal deposited on the glassine paper to a thickness in the order of from about 10 to about 1,000 angstroms and having an emissivity no greater than about 0.20.

6. Packaging as set forth in Claim 1, wherein said outer layer, said barrier and said layer of low emissivity material are flexible.

7. Packaging as set forth in Claim 1, wherein said outer layer comprises shape retentive paperboard.

8. A degradable and recyclable container for enclosing and thermally insulating a prepared food product comprising
    an outer shell of recyclable material having inner and outer surfaces,
    a recyclable barrier resistant to passage of air and grease adhered to the inner surface of said shell, and
    a degradable coating of low emissivity on the inner surface of said barrier, said coating having an emissivity no greater than about 0.50.

9. A container as set forth in Claim 8 wherein said shell is formed of shape-retaining paperboard.

10. A container as set forth in Claim 8 wherein said shell is formed of paper.

11. A container as set forth in Claim 8 wherein said barrier comprises glassine paper adhered to the inner surface of said shell with a water soluble, degradable adhesive.

12. A container as set forth in Claim 11 wherein said coating comprises aluminum vapor deposited on the inner surface of the glassine paper.

13. A container as set forth in Claim 8 wherein said barrier comprises glassine paper adhered to the interior surface of said shell with a water soluble degradable adhesive and said coating comprises a metal deposited on the inner surface of said barrier to a thickness in the order of from about 10 to about 10,000 angstroms, the inner surface of said metal coating having an emissivity no greater than about 0.50.

14. A container as set forth in Claim 13 wherein said coating comprises aluminum vapor deposited on said barrier to a thickness in the order of from about 10 to about 1,000 angstroms, the inner surface of said aluminum coating having an emissivity no greater than about 0.20.

15. A container as set forth in Claim 13 including a thin, food compatible, degradable, protective coating over said metal coating.

16. A degradable and recyclable packaging material for enclosing and thermally insulating prepared food products comprising
    an outer sheet of recyclable material having inner and outer surfaces,
    a recyclable barrier material resistant to passage of air and grease lining the inner surface of said outer sheet, and
    a degradable coating of low emissivity on the inner surface of said barrier material, the inner surface of said coating having an emissivity no greater than about 0.50.

17. A packaging material as set forth in Claim 16 wherein said outer sheet comprises paper having a thickness in the order of from about 0.0005 to about 0.005 inch.

18. A packaging material as set forth in Claim 16 wherein said outer sheet comprises shape retaining paperboard having a thickness in the order of from about 0.001 inch to about 0.050 inch.

19. A packaging material as set forth in Claim 16 wherein said barrier material comprises glassine paper having a thickness of from about 0.0005 inch to about 0.010 inch, and is adhered to the inner surface of said outer sheet by a water soluble, food compatible, degradable adhesive.

20. A packaging material as set forth in Claim 16 wherein said coating comprises aluminum deposited on said barrier material to a thickness in the order of from about 10 to 1,000 angstroms, the inner surface of said aluminum coating having an emissivity no greater than about 0.20.

21. A packaging material as set forth in Claim 16 including a thin, degradable, protective coating over said low emissivity coating, said protective coating comprising a food compatible polymeric lacquer.

22. A process for retaining for a period of time the heat contained within a freshly cooked, prepared food product comprising the steps of
    enclosing the food product while hot within a degradable and recyclable material having an inner surface of low emissivity,
    backing up the material of low emissivity with a degradable and recyclable barrier layer of a material having resistance to passage of air and grease, and

supporting the material of low emissivity and the barrier layer with, and enclosing the contained food product within, an exterior layer of a degradable and recyclable supporting material.

10

12

14

FIG. 1

12

14

10

12

FIG. 2

28
26
24
20b
22

20

20a

FIG. 3

## FIG. 4

## FIG. 5

△ BOTTOM OF FOAM BOX      ▽ WATER TEMP FOAM BOX
× BOTTOM OF LOW E BOX      + WATER TEMP LOW E BOX

**European Patent Office**

## EUROPEAN SEARCH REPORT

Application Number

EP 92 10 0022

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 319 252 (BROWN GABLES) | 1,3,4, 6-10, 16-18, 20,22 | B65D81/38 B32B29/06 |
| Y | * page 1, line 26 - page 2, line 7 * | 21 | |
| A | * page 8, line 14 - line 16 *<br>--- | 5,12-15 | |
| Y | GB-A-1 568 294 (WATERMAN) | 21 | |
| A | * page 1, line 46 - line 58 *<br>--- | 11 | |
| A | WORLD PATENT INDEX<br>DERWENT PUBLICATIONS LTD.<br>ACCESS NUMBER AN84-065953<br>& JP59021794 [MITSUBISHI PAPER] 3-2-84<br>--- | 2,5, 11-13,19 | |
| A | WO-A-9 013 708 (WEYHAEUSER)<br>----- | | |
| | | | **TECHNICAL FIELDS SEARCHED (Int. Cl.5 )**<br><br>B65D<br>B32B |

The present search report has been drawn up for all claims

| Place of search | Date of completion of the search | Examiner |
|---|---|---|
| THE HAGUE | 30 MARCH 1992 | LEONG, C. Y. |